# EUROPÄISCHE PATENTSCHRIFT

(11) **EP 3 261 813 B1**
(45) Veröffentlichungstag und Bekanntmachung des Hinweises auf die Patenterteilung: **22.04.2020**
(21) Anmeldenummer: 16707019.2
(22) Anmeldetag: 23.02.2016
(51) Int. Cl.: B29B 17/00, B29C 70/50, B29C 70/08

(54) **VERFAHREN ZUR HERSTELLUNG FASERVERSTÄRKTER BAUTEILE ODER HALBZEUGE**
METHOD FOR PRODUCTION OF FIBRE-REINFORCED COMPONENTS OR SEMI-FINISHED PRODUCTS
PROCÉDÉ DE FABRICATION DE COMPOSANTS OU DEMI-PRODUITS RENFORCÉS DE FIBRES

(30) Priorität: 23.02.2015 EP 15156145
(43) Veröffentlichungstag der Anmeldung: 03.01.2018
(73) Patentinhaber: Volkswagen Aktiengesellschaft, 38440 Wolfsburg (DE)
(72) Erfinder: DESBOIS, Philippe, 68535 Edingen-Neckarhausen (DE); WOLLNY, Andreas, 67251 Freinsheim (DE); EHLEBEN, Max, 38126 Braunschweig (DE); BITTERLICH, Maurice, 38527 Meine (DE); ZEUNER, Katja, 38104 Braunschweig (DE); MERTENS, Thomas, 38468 Ehra-Lessien (DE); TAEGER, Olaf, 38126 Braunschweig (DE)
(74) Vertreter: Bierschneider, Walter
(86) Internationale Anmeldenummer: PCT/EP2016/053739
(87) Internationale Veröffentlichungsnummer: WO 2016/135124

(56) Entgegenhaltungen:
- WO-A2-2014/086757
- US-A- 4 141 929
- US-A1- 2010 305 269

## Beschreibung

Die Erfindung geht aus von einem Verfahren zur Herstellung faserverstärkter Bauteile oder Halbzeuge, wobei Fasern mit Monomer getränkt werden.

Zur Herstellung von faserverstärkten Verbundwerkstoffen werden üblicherweise die Fasern in ein geeignetes Werkzeug eingelegt und anschließend mit dem geschmolzenen Polymeren umgossen. Alternativ ist es auch möglich, die Fasern mit einer Monomerlösung zu umgießen, die in der Form auspolymerisiert. Insbesondere bei dichten Faser-Packungen hat dies jedoch den Nachteil, dass aufgrund der hohen Viskosität der Polymerschmelzen die Fasern nicht vollständig benetzt werden, was zu einer Schwächung des Werkstoffes führt. Das Umgießen mit Monomeren wird üblicherweise bei duroplastischen Polymeren durchgeführt, hat jedoch den Nachteil, dass eine kontinuierliche Verarbeitung nicht möglich ist, da die aus dem faserverstärkten Verbundwerkstoff hergestellten Bauteile jeweils in der Form aushärten müssen. Nach dem Umgießen und Aushärten ist die Formgebung bereits erfolgt. Die Herstellung von weiterverarbeitbaren Halbzeugen ist auf diese Weise nur schwer möglich. Es sind Prepregs auf Basis von teilausgehärteten Epoxidharzen bekannt, diese müssen aber, um ein unerwünschtes Aushärten während der Lagerung zu vermeiden, gekühlt gelagert werden. Das Aushärten in der Form limitiert zudem den möglichen Durchsatz, was insbesondere zur Herstellung von Bauteilen in der Großserie nachteilig ist.

Die Benetzung der Fasern mit einem Monomer für ein faserverstärktes thermoplastisches Polymer ist aus DE-A 196 02 638 bekannt. Hierbei wird ein Verstärkungsfaserngebilde, beispielsweise ein Gewebe oder einzelne Lagen aus Endlosfasern, mit einer Schmelze aus Lactam, das Aktivator, Katalysator und gegebenenfalls weitere Additive enthält, getränkt. Nach dem Tränken mit der Lactamschmelze erfolgt eine Erwärmung auf Reaktionstemperatur und das Lactam polymerisiert zu dem korrespondierenden Polyamid. Um zu vermeiden, dass geschmolzenes Lactam aus dem Verstärkungsfaserngebilde abtropft, ist es notwendig, unmittelbar an das Tränken den Polymerisierungsschritt anzuschließen. Dies hat den Nachteil, dass durch den Polymerisierungsschritt die Verarbeitungsgeschwindigkeit limitiert wird. Zur Herstellung einer größeren Anzahl an Teilen ist es notwendig, jeweils Anlagen bereitzustellen, in denen zunächst die Verstärkungsfaserngebilde mit der Lactamschmelze getränkt werden und anschließend zu dem Formteil geformt werden. Aus der DE-A 196 02 638 ist weiterhin bekannt, zur Herstellung von Formteilen aus flachen, faserverstärkten Elementen zunächst die flachen, faserverstärkten Elemente durch Tränken von textilen Strukturen mit Lactam und anschließendes Auspolymerisieren zu erzeugen und anschließend die so hergestellten auspolymerisierten faserverstärkten Elemente in einem beheizten Werkzeug zum Formteil umzuformen.

Um die Limitierung der Verarbeitungsgeschwindigkeit durch den Polymerisierungsschritt zu minimieren ist es aus WO-A 2012/116947 bekannt, zunächst die Faserstruktur mit einer Monomerlösung zu tränken und dies anschließend abzukühlen, wodurch das Monomer erstarrt, ohne auszupolymerisieren. Die abgekühlten Strukturen werden zu einem flachen Halbzeug konfektioniert, das dann weiterverarbeitet werden kann.

Aus der US-4,141,929 ist ein Verfahren bekannt, bei dem eine Harzpaste für einen vernetzbaren Polyester auf eine Trägerfolie aufgebracht wird, anschließend Fasern auf die Paste aufgebracht werden, eine zweite Folie aufgebracht wird und das ganze anschließend durch mindestens ein Walzenpaar geführt wird.

Bei der Konfektionierung und der Weiterverarbeitung fällt Verschnitt als Abfall an. Auch bei der Herstellung von Bauteilen durch Spritzgießverfahren fallen Abfälle, beispielsweise das in den Anspritzkanälen ausgehärtete Polymer, an. Der bei der Konfektionierung von nicht auspolymerisierten Halbzeugen anfallende Verschnitt enthält nicht auspolymerisiertes Monomer, wohingegen das Monomer im bei der Fertigteilherstellung oder beim Spritzguss anfallenden Verschnitt auspolymerisiert ist.

Derzeit lässt sich der Verschnitt aufgrund des unterschiedlichen Polymerisierungsgrades und der enthaltenen Fasern nur begrenzt und insbesondere nur zur Herstellung von minderwertigeren Bauteilen verwenden. Üblicherweise wird der Verschnitt aufgrund der Zusammensetzung entsorgt, obwohl dieser wertvolle Rohstoffe enthält.

Aufgabe der vorliegenden Erfindung ist es daher, ein Verfahren bereitzustellen, das eine Funktionalisierung der Bauteile während der Herstellung erlaubt und/oder bei dem der bei der Konfektionierung und Bearbeitung von Halbzeugen und Bauteilen anfallende Verschnitt genutzt werden kann, um die als Abfälle anfallenden Mengen zu reduzieren.

Gelöst wird die Aufgabe durch ein Verfahren zur Herstellung faserverstärkter Bauteile oder Halbzeuge, wobei Fasern mit Monomer getränkt werden und nach dem Tränken Fasern enthaltende Flakes und/oder Einzelfasern zugegeben werden.

Die Fasern enthaltenden Flakes werden zum Beispiel aus Fasermatten geschnitten. Bevorzugt ist es, als Fasern enthaltende Flakes zerkleinerten, Fasern enthaltenden Verschnitt einzusetzen. Es ist jedoch auch möglich, Neumaterial für die die Fasern enthaltenden Flakes einzusetzen.

Unter "Verschnitt" wird im Rahmen der vorliegenden Erfindung bei der Halbzeugherstellung oder Bauteilherstellung anfallender Abfall verstanden, der für die Formgebung abgeschnitten wurde. Der Verschnitt kann dabei zum Beispiel bei der Halbzeugherstellung bereits anfallen, bevor das Monomer, mit dem die Faserstruktur getränkt ist, auspolymerisiert ist. In diesem Fall liegt zumindest ein Teil des Monomers noch in nicht polymerisiertem Zustand vor. Neben dem bei der Halbzeugherstellung anfallenden Verschnitt kann auch bei der Fertigteilherstellung Verschnitt anfallen. In diesem Fall ist das Monomer vollständig auspolymerisiert, so dass der Verschnitt die Faserstruktur mit Polymer enthält. Im Rahmen der vorliegenden Erfindung fällt sowohl der nicht polymerisiertes oder nur teilpolymerisiertes Monomer enthaltende Verschnitt als auch der auspolymerisierte Verschnitt unter den Begriff "Verschnitt".

Durch die Zugabe der Fasern enthaltenden Flakes lassen sich die Eigenschaften des Bauteils bei der Herstellung an die gewünschten Anforderungen anpassen. Insbesondere ist eine weitere Verstärkung auch gezielt an vorgegebenen Positionen möglich.

Insbesondere hat sich gezeigt, dass durch die Zugabe des zerkleinerten, Fasern enthaltenden Verschnitts die Eigenschaften der so hergestellten Bauteile nicht nachteilig beeinflusst werden. Somit ist es durch das erfindungsgemäße Verfahren möglich, die bei der Konfektionierung und Weiterverarbeitung als Verschnitt anfallenden Abfälle zu nutzen. Insbesondere hat sich gezeigt, dass es möglich ist, sowohl Verschnitt aus der Prepreg-Herstellung, das heißt mit nicht auspolymerisiertem Monomer, als auch aus der Fertigteilherstellung, bei der das Polymer vollständig auspolymerisiert ist, einzusetzen.

In einer ersten Ausführungsform werden die Fasern, das Monomer und die Fasern enthaltenden Flakes und/oder Einzelfasern in ein Presswerkzeug eingebracht, wobei das Monomer in dem Presswerkzeug auspolymerisiert. Auf diese Weise lassen sich sowohl langfaserverstärkte Bauteile als auch kurzfaserverstärkte Bauteile herstellen. Die Zerkleinerung des Verschnitts erfolgt entsprechend der herzustellenden Bauteile. Bei kurzfaserverstärkten Bauteilen muss der Verschnitt stärker zerkleinert werden als bei langfaserverstärkten Bauteilen. Als Presswerkzeug eignet sich dabei insbesondere ein Spritzgusswerkzeug, in das die Fasern, das Monomer und die Fasern enthaltenden Flakes und/oder Einzelfasern mit einer Spritzgussmaschine eingepresst werden. Alternativ zu einer Spritzgussmaschine kann aber auch jede andere Presse, mit der sich Monomer und Fasern verarbeiten lassen, eingesetzt werden.

Besonders bevorzugt ist es jedoch, mit dem erfindungsgemäßen Verfahren flache Halbzeuge in Form monomergetränkter Faserstrukturen herzustellen. Zur Herstellung getränkter Faserstrukturen als Halbzeug werden folgende Schritte durchgeführt:
(a) Zuführen einer Faserstruktur (15) auf ein Transportband (7),
(b) Tränken der Faserstruktur (15) mit einer Monomer, gegebenenfalls Aktivator und gegebenenfalls Katalysator enthaltenden Lösung,
(c) Verteilen der Fasern enthaltenden Flakes und/oder Einzelfasern auf der getränkten Faserstruktur,
(d) Durchführen der Faserstruktur (15) mit der Lösung durch mindestens ein Walzenpaar (31), in dem Druck auf die Faserstruktur (15) ausgeübt wird,
(e) Abkühlen der getränkten Faserstruktur (25), so dass das Monomer erstarrt.

Durch die Herstellung von getränkten Faserstrukturen als Halbzeug wird die Halbzeugherstellung von der Fertigteilherstellung entkoppelt. Hierdurch ist es möglich, die einzelnen Maschinenlaufzeiten zu reduzieren und zum anderen geringere Lagerkapazitäten in Anspruch zu nehmen, da die Halbzeuge, insbesondere wenn diese in Form von Flächengebilden vorliegen, deutlich weniger Platz in Anspruch nehmen als dreidimensional geformte Fertigteile. Die Entkopplung ist insbesondere durch das Abkühlen der getränkten Faserstruktur auf eine Temperatur, bei der das Monomer erstarrt, möglich, da dies erlaubt, die getränkte Faserstruktur nach der Herstellung zu konfektionieren und die konfektionierten Halbzeuge der Fertigteilherstellung bei Bedarf zuzuführen. Bei der Fertigteilherstellung wird das Werkzeug auf eine Temperatur erwärmt, bei der das Monomer zum fertigen Polymer auspolymerisiert.

Wie vorstehend bereits beschrieben, kann sowohl bei der Fertigteilherstellung durch das erfindungsgemäße Verfahren, beispielsweise durch Spritzgussverfahren, als auch bei der Halbzeugherstellung der zerkleinerte Verschnitt auspolymerisiert sein und/oder nicht auspolymerisiertes, erstarrtes Monomer enthalten. Wenn die Fasern enthaltenden Flakes und/oder die Einzelfasern bei der Fertigteilherstellung eingesetzt werden, polymerisiert das noch nicht auspolymerisierte Monomer in der Spritzgussmaschine aus. Bei der Halbzeugherstellung wird bereits auspolymerisierter Verschnitt stark zerkleinert verteilt auf dem Halbzeug und verklebt mit der Monomerlösung, mit der die Faserstruktur getränkt ist. Wenn Fasern enthaltende Flakes eingesetzt werden, die mit nicht auspolymerisiertem Monomer getränkt sind, zum Beispiel nicht auspolymerisierter Verschnitt, vermischt sich das Monomer aus den Fasern enthaltenden Flakes mit dem Monomer der getränkten Faserstruktur und die zerkleinerten Fasern haften ebenfalls monomergetränkt an der Oberfläche der Faserstruktur. Bei der Fertigteilherstellung schmilzt das bereits auspolymerisierte Polymer und vermischt sich mit dem auspolymerisierenden Monomer zu einem homogenen Polymer. Wenn anstelle des Verschnitts Neumaterial eingesetzt wird, wird bevorzugt Material genutzt, das nicht getränkt ist. Jedoch ist es auch möglich, das Neumaterial vor oder nach dem Zerkleinern, vorzugsweise vor dem Zerkleinern, mit Monomer zu tränken und gegebenenfalls das Monomer teilzupolymerisieren oder auszupolymerisieren, bevorzugt jedoch teilzupolymerisieren.

Bei der Herstellung von Bauteilen mit aufgespritzten Elementen wird derzeit üblicherweise geschmolzenes Polymer mit Fasern oder Monomer mit Kurzfasern aufgespritzt. Durch die Zugabe der Fasern enthaltenden Flakes ist es möglich, auch Monomer mit Langfasern aufzuspritzen. Hierdurch ergibt sich eine bessere Haftung der Elemente an der getränkten Faserstruktur. Durch das Monomer wird zusätzlich die Bildung einer Bindenaht, die die mechanischen Eigenschaften verschlechtert, verhindert.

Der bei der Konfektionierung von Halbzeugen oder der Fertigteilherstellung anfallende Verschnitt kann zum Beispiel durch Hacken, Mahlen oder Schreddern zerkleinert werden. Hierbei sind alle dem Fachmann bekannten Verfahren, die zum Hacken, Mahlen oder Schreddern genutzt werden können, einsetzbar. Das Zerkleinern erfolgt dabei vorzugsweise unter trockener Atmosphäre. Insbesondere wenn der Verschnitt nicht auspolymerisiertes Monomer enthält, wird hierdurch eine Polymerisation und/oder eine unzulässige Aufnahme von Feuchtigkeit verhindert. Besonders bevorzugt wird der Verschnitt durch Schreddern zerkleinert. Wenn Neumaterial für die Fasern enthaltenden Flakes eingesetzt wird, kann dieses auf die gleiche Weise zerkleinert werden, um die Flakes zu erhalten.

In einer bevorzugten Ausführungsform wird der bei der Halbzeugherstellung anfallende Verschnitt, der zum Beispiel beim Säubern der Ränder anfällt, indem die Ränder abgeschnitten werden, zerkleinert und unmittelbar nach dem Abschneiden auf der getränkten Faserstruktur verteilt.

Das Fasern enthaltende Material zur Herstellung der Fasern enthaltenden Flakes, zum Beispiel der Verschnitt, wird vorzugsweise so weit zerkleinert, dass die im Verschnitt enthaltenen Fasern eine Länge im Bereich von 10 µm bis 10 cm aufweisen. Mehr bevorzugt ist es, das Fasern enthaltende Material so weit zu zerkleinern, dass die darin enthaltenen Fasern eine Länge im Bereich von 50 µm bis 2 cm aufweisen, und besonders bevorzugt ist es den Verschnitt so weit zu zerkleinern, dass die Fasern eine Länge im Bereich von 100 µm bis 5 mm aufweisen.

Um eine ausreichende Stabilität des aus dem Halbzeug hergestellten Bauteils oder des hergestellten Bauteils zu erhalten, ist es weiterhin bevorzugt, wenn der Anteil an Fasern enthaltenden Flakes und/oder Einzelfasern bezogen auf die Masse der abgekühlten getränkten Faserstruktur im Bereich von 2 bis 60 Gew.-% liegt. Weiter bevorzugt ist es, wenn der Anteil an Fasern enthaltenden Flakes und/oder Einzelfasern bezogen auf die Masse der abgekühlten getränkten Faserstruktur im Bereich von 5 bis 50 Gew.-% liegt und insbesondere im Bereich von 10 bis 40 Gew.-%.

Der Transport der Faserstruktur kann entweder frei oder mit Hilfe eines Transportbandes erfolgen. Bevorzugt ist der Transport mit Hilfe eines Transportbandes. Hierbei wird die Faserstruktur zunächst auf ein Transportband aufgebracht und mit diesem durch die Anlage gefördert. Nicht notwendig ist der Einsatz eines Transportbandes, wenn die Faserstruktur mit einer Folie kaschiert werden soll. In diesem Fall kann die Folie zur Kaschierung als Transportband genutzt werden. Auch bei Einsatz von Faserstrukturen, die so ausgebildet sind, dass die Monomer, gegebenenfalls Aktivator und gegebenenfalls Katalysator enthaltende Lösung nach dem Auftrag und vor Erreichen des Walzenpaares nicht austropft, kann auf ein Transportband verzichtet werden. Bei Faserstrukturen, die dies nicht ermöglichen, ist jedoch der Einsatz eines Transportbandes notwendig, um die notwendige Menge an Lösung in der Faserstruktur zu halten.

Um eine gute Anhaftung der Fasern enthaltenden Flakes und/oder Einzelfasern an der getränkten Faserstruktur zu erhalten, ist es bevorzugt, wenn das Monomer der getränkten Faserstruktur noch flüssig ist, wenn die Fasern enthaltenden Flakes und/oder Einzelfasern darauf verteilt werden. Insbesondere bei Verwendung von Monomeren zur Polyamidherstellung, insbesondere, wenn das Monomer ein Lactam ist, ist es bevorzugt, wenn die getränkte Faserstruktur eine Temperatur von mehr als 70°C aufweist, wenn die Fasern enthaltenden Flakes und/oder Einzelfasern darauf verteilt werden. Bei einer Temperatur von mehr als 70°C weist das Lactam eine ausreichend niedrige Viskosität auf, damit die Fasern enthaltenden Flakes und/oder Einzelfasern an der Faserstruktur anhaften können.

Wenn das Halbzeug zur Herstellung von Bauteilen eingesetzt werden soll, die zusätzliche Funktionselemente, beispielsweise Rippen zur Verstärkung, aufweisen, ist es besonders bevorzugt, die Fasern enthaltenden Flakes und/oder Einzelfasern an Positionen auf die Faserstruktur aufzubringen, an denen eine zusätzliche Verstärkung notwendig ist.

Eine zusätzliche Verstärkung, beispielsweise durch Rippen lässt sich alternativ auch erzielen, wenn bei der Fertigteilherstellung aus dem zuvor produzierten Halbzeug die Funktionselemente, beispielsweise Rippen, Clipse zur Verbindung von Bauteilen oder Verstärkungen für Gewinde, mit einem Spritzgussverfahren angespritzt werden. Hierbei kann das zusätzlich angespritze Polymer ebenfalls Fasern enthaltende Flakes und/oder Einzelfasern enthalten. Hierbei wird der Anteil an Fasern enthaltenden Flakes und/oder Einzelfasern so gewählt, dass das angespritzte Polymer einen Anteil von 5 bis 70 Vol.-% Fasern enthält. Bevorzugt ist der Anteil an Fasern im Bereich von 10 bis 60 Vol.-% und insbesondere im Bereich von 20 bis 50 Vol.-%. Die Fasern können dabei den Fasern enthaltenden Flakes und/oder Einzelfasern entstammen, die entsprechend fein zerkleinert worden sind, oder zusätzlich zugegeben werden. Als Fasern können Kurzfasern, Langfasern oder eine Mischung aus Kurzfasern und Langfasern zugegeben werden. Besonders bevorzugt ist es jedoch, wenn das Polymermaterial, aus dem die Funktionselemente angespritzt werden nur Kurzfasern enthält und demzufolge die Fasern enthaltenden Flakes so stark zerkleinert sind, dass die Faserlänge in den Flakes der Länge von Kurzfasern entspricht.

Hierbei bedeutet "Langfasern" eine Faserlänge im Bereich von 1 bis 50 mm und "Kurzfasern" eine Faserlänge im Bereich von 0,1 bis 1 mm.

Alternativ zum Aufbringen der Fasern enthaltenden Flakes und/oder Einzelfasern in Bereichen, in denen eine zusätzliche Verstärkung gewünscht ist oder Funktionselemente angebracht werden, ist es auch möglich, dass die Fasern enthaltenden Flakes und/oder Einzelfasern gleichmäßig auf der Faserstruktur aufgebracht werden. Hierdurch wird eine gleichmäßige Verstärkung des Halbzeugs erzielt. Eine zusätzliche Verstärkung ist jedoch auch hier möglich, indem Funktionselemente bei der Fertigteilherstellung angespritzt werden.

Auch bei gleichmäßig verteilt aufgebrachten zerkleinerten Flakes und/oder Einzelfasern hat sich gezeigt, dass sich die Flakes und/oder Einzelfasern bei der Fertigteilherstellung in Werkzeugkavitäten sammeln, so dass bei der Herstellung von Bauteilen, die zusätzliche Funktionselemente, beispielsweise Rippen, aufweisen, die Funktionselemente insbesondere durch das die Fasern enthaltenden Flakes und/oder Einzelfasern enthaltende Material verstärkt werden.

Eine gezielte Positionierung der Fasern enthaltenden Flakes und/oder Einzelfasern entweder an bestimmten Positionen oder alternativ auch gleichmäßig über das gesamte Halbzeug verteilt lässt sich auch erzielen, indem die getränkte Faserstruktur mit den darauf verteilten Fasern enthaltenden Flakes und/oder Einzelfasern in einem Spritzgussverfahren überspritzt wird. Durch das Überspritzen kann alternativ auch eine homogene Oberfläche erzeugt werden, indem zum Beispiel eine Polymerschmelze ohne darin enthaltene Fasern eingesetzt wird.

Zur Ausbildung von Funktionselementen ist es möglich, eine Mischung aus Monomer, Fasern und Fasern enthaltenden Flakes auf die Faserstruktur oder das Bauteil aufzuspritzen. Alternativ kann jedoch auch - wie sonst in Spritzgussprozessen üblich - eine Mischung aus Polymerschmelze mit Fasern und Fasern enthaltenden Flakes aufgespritzt werden. Weiterhin ist es selbstverständlich auch möglich, zum Anspritzen der Funktionselemente eine Polymerschmelze einzusetzen, die keine Fasern enthaltenden Flakes enthält. Je nach Einsatzzweck der Funktionselemente kann die Polymerschmelze aber auch in diesem Fall zusätzlich Verstärkungsstoffe, beispielsweise Fasern, enthalten.

Das erfindungsgemäße Verfahren eignet sich insbesondere zur Herstellung von monomergetränkten Faserstrukturen, die in einem späteren Prozess zu einem Bauteil aus einem faserverstärkten Polymer weiterverarbeitet werden können. Besonders bevorzugt ist es, mit dem Verfahren monomergetränkte Faserstrukturen herzustellen, die zur Herstellung von Bauteilen aus faserverstärkten thermoplastischen Polymeren, insbesondere aus faserverstärkten Polyamiden eingesetzt werden können. Hierzu ist das Monomer vorzugsweise ausgewählt aus der Gruppe der Lactame, gegebenenfalls gemischt mit bis zu 50 Vol.-% Monomeren aus der Gruppe der Lactone.

Das Monomer ist vorzugsweise ein C₃- bis C₁₂-Lactam und wird bevorzugt ausgewählt aus der Gruppe umfassend Caprolactam, Piperidon, Pyrrolidon, Lauryllactam oder deren Mischungen. Besonders bevorzugt wird ein Monomer eingesetzt, das ausgewählt ist aus der Gruppe umfassend Caprolactam, Lauryllactam und deren Mischungen.

Wenn zusätzlich Lactone zugemischt werden, so werden diese bei der Polymerisierung zum Polyamid mit dem Monomer, das ausgewählt ist aus der Gruppe der Lactame, copolymerisiert. Als Lacton wird bevorzugt Caprolacton eingesetzt.

Als optionaler Aktivator eigenen sich unter anderem aliphatische Diisocyanate wie Butylendiisocyanat, Hexamethylendiisocyanat, Octamethylendiisocyanat, Decamethylendiisocyanat, Undecamethylendiisocyanat, Dodecamethylendiisocyanat, oder auch aromatische Diisocyanate wie Toluyldiisocyanat, Isophorondiisocyanat, 4,4'-Methylenbis(phenyl-isocyanat), 4,4'-Methylen-bis(cyclohexylisocyanat) oder Polyisocyanate wie Isocyanurate von Hexamethylendiisocyanat, beispielsweise erhältlich als Basonat® HI 100 der BASF SE, Allophanate wie Ethylallophanat, oder deren Mischungen. Bevorzugt als Aktivator sind Hexamethylendiisocyanat, Isophorondiisocyanat, insbesondere Hexamethylendiisocyanat. Die Diisocyanate können durch Monoisocyanate ersetzt werden.

Alternativ eignen sich als Aktivator aliphatische Disäurehalogenide wie Butylendisäurechlorid, Butylendisäurebromid, Hexamethylendisäurechlorid, Hexamethylendisäurebromid, Octamethylendisäurechlorid, Octamethylendisäurebromid, Decamethylendisäurechlorid, Decamethylendisäurebromid, Dodecamethylendisäurechlorid, Dodecamethylendisäurebromid als auch aromatische Disäurehalogenide wie Toluylsäurechlorid, Toluylsäurebromid, Isophorondisäurechlorid, Isophorondisäurebromid, 4,4'-Methylenbis(phenylsäurechlorid), 4,4'-Methylenbis(phenylsäurebromid), 4,4'-Methylenbis(cyclohexylsäurechlorid), 4,4'-Methylenbis(cyclohexylsäurebromid), oder deren Mischungen, bevorzugt Hexamethylendisäurechlorid, Hexamethylendisäurebromid oder deren Mischungen, besonders bevorzugt Hexamethylendisäurechlorid. Die Disäurehalogenide können durch Monosäurehalogenide ersetzt werden.

Als optionaler Katalysator eignen sich zum Beispiel Natriumcaprolactamat, Kaliumcaprolactamat, Bromidmagnesiumcaprolactamat, Chloridmagnesiumcaprolactamat, Magnesiumbiscaprolactamat, Natriumhydrid, Natriummetall, Natriumhydroxid, Natriummethoxid, Natriumethoxid, Natriumpropoxid, Natriumbutoxid, Kaliumhydrid, Kaliummetall, Kaliumhydroxid, Kaliummethoxid, Kaliumpropoxid, Kaliumbutoxid, bevorzugt Natriumhydrid, Natriummetall, Natriumcaprolactamat, besonders bevorzugt Natriumcaprolactamat, zum Beispiel erhältlich als Bruggolen® C 10, eine Lösung aus 18 Gew.-% Natriumcaprolactamat in Caprolactam.

Das Molverhältnis von Lactam zum Katalysator kann in weiten Grenzen variiert werden und beträgt in der Regel 1:1 bis 10 000:1, bevorzugt 10:1 bis 1 000:1, besonders bevorzugt 50:1 bis 300:1.

Das Molverhältnis von Aktivator zum Katalysator kann ebenfalls in weiten Grenzen variiert werden und beträgt in der Regel 100:1 bis 1:10 000, bevorzugt 10:1 bis 1:100, besonders bevorzugt 1:1 bis 1:10.

Neben dem Katalysator und dem Aktivator kann das Lactam noch weitere Additive enthalten. Die weiteren Additive werden zur Einstellung der Eigenschaften des aus dem Lactam hergestellten Polyamids zugegeben. Übliche Additive sind zum Beispiel Weichmacher, Schlagzähmodifizierer, Vernetzer, Farbstoffe oder Flammschutzmittel. Hierbei können die üblicherweise bei der Herstellung von Polyamiden eingesetzten Additive verwendet werden.

Damit die Viskosität der Monomer, gegebenenfalls Aktivator und gegebenenfalls Katalysator enthaltenden Lösung für die gleichmäßige Verteilung in der Faserstruktur ausreichend niedrig ist, ist es bevorzugt, wenn die Lösung mit einer Temperatur im Bereich von 80 bis 120 °C aufgetragen wird. Das Walzenpaar, mit dem der Druck auf die Faserstruktur mit der darauf aufgetragenen Lösung ausgeübt wird, weist vorzugsweise eine Temperatur von maximal 100 °C auf, besonders bevorzugt weist das Walzenpaar eine Temperatur im Bereich von 40 bis 60 °C auf. Die Faserstruktur im Rahmen der vorliegenden Erfindung ist zum Beispiel ein Gewebe, Gelege, Vlies, Gestrick, Gewirk oder Geflecht oder ist aus Rovings aufgebaut. Das Gewebe, Gelege, Vlies, Gestrick,Gewirk oder Geflecht oder die aus Rovings aufgebaute Faserstruktur kann dabei in einer oder in mehreren Lagen eingesetzt werden. Bevorzugt ist mehr als eine Lage. Gelege im Rahmen der vorliegenden Erfindung umfassen eine oder mehrere Lagen aus parallel ausgerichteten Fasern, Garnen, Zwirnen oder Seilen, wobei die einzelnen Lagen der parallel ausgerichteten Fasern, Garne, Zwirne oder Seile zueinander gedreht sein können. Bevorzugt liegt die Faserstruktur als Gewebe oder Gelege vor.

Wenn bei Gelegen die Lagen parallel ausgerichteter Fasern, Garne, Zwirne oder Seile gedreht zueinander eingesetzt werden, sind die einzelnen Lagen besonders bevorzugt jeweils um einen Winkel von 90° zueinander gedreht (bidirektionaler Aufbau). Bei Einsatz von drei Lagen oder eines Vielfachen von drei Lagen ist es auch möglich, die einzelnen Lagen um einen Winkel von 60° zueinander gedreht anzuordnen und bei vier Lagen oder einem Vielfachen von vier Lagen um einen Winkel von 45° zueinander gedreht. Weiterhin ist es auch möglich, mehr als eine Lage an Fasern mit gleicher Ausrichtung vorzusehen. Hierbei können ebenfalls Lagen zueinander verdreht sein, wobei die Anzahl an Lagen mit Fasern gleicher Ausrichtung in jeder der Ausrichtungen der Fasern unterschiedlich sein kann, beispielsweise vier Lagen in einer ersten Richtung und eine Lage in einer dazu zum Beispiel um 90° gedrehten Richtung (bidirektionaler Aufbau mit Vorzugsrichtung). Weiterhin ist auch ein quasiisotroper Aufbau bekannt, bei dem die Fasern einer zweiten Lage um 90° gedreht zu Fasern einer ersten Lage angeordnet sind und weiterhin Fasern einer dritten Lage um 45° gedreht zu den Fasern der zweiten Lage.

Besonders bevorzugt zur Herstellung der getränkten Faserstruktur werden Faserstrukturen mit 2 bis 10 Lagen, insbesondere 2 bis 6 Lagen eingesetzt.

Die Fasern, die für das erfindungsgemäße Verfahren eingesetzt werden, sind vorzugsweise solche aus anorganischen Mineralien wie Kohlenstoff, beispielsweise als Niedermodulcarbonfasern oder Hochmodulcarbonfasern, silikatische und nicht silikatische Gläser der verschiedensten Art, Basalt, Bor, Siliciumcarbid, Kaliumtitanat, Metalle, Metalllegierungen, Metalloxide, Metallnitride, Metallcarbide und Silikate, sowie organische Materialien wie natürliche und synthetische Polymere, beispielsweise Polyacrylnitrile, Polyester, ultrahochgereckte Polyolefinfasern, Polyamide, Polyimide, Aramide, Flüssigkristallpolymere, Polyphenylensulfide, Polyetherketone, Polyetheretherketone und Polyetherimide. Besonders bevorzugt sind Glasfasern, Kohlenstofffasern, Aramidfasern, Stahlfasern, Kaliumtitanatfasern, Basaltfasern, Keramikfasern und/oder sonstige hinreichend temperaturbeständige polymere Fasern oder Fäden.

Die Fasern, insbesondere die Fasern der Faserstruktur, können zusätzlich mit einer Schlichte vorbehandelt sein, um eine bessere Haftung der Monomer, gegebenenfalls Aktivator und gegebenenfalls Katalysator enthaltenden Lösung zu erhalten. Zusätzlich wird durch den Einsatz der Schlichte auch die Haftung des Polymeren nach dem Ausreagieren des Monomeren zum Polymer verbessert. Die Vorbehandlung mit der Schlichte kann dabei bereits bei der Herstellung der Faserstruktur oder sogar bereits bei der Faserherstellung erfolgen.

Die Fasern der Faserstruktur und die Fasern der Fasern enthaltenden Flakes und/oder Einzelfasern können aus dem gleichen Material oder aus unterschiedlichen Materialien gefertigt sein. So ist es zum Beispiel möglich, als Fasern für die Faserstruktur Kohlenstofffasern und für die Flakes und/oder Einzelfasern Glasfasern einzusetzen. Jede andere Kombination an Fasermaterialien für Faserstruktur und Flakes und/oder Einzelfasern ist auch möglich, zum Beispiel Glasfasern für die Faserstruktur und Kohlenstofffasern für die Flakes und/oder Einzelfasern oder auch Kohlenstofffasern oder Glasfasern für die Faserstruktur und organische Fasern oder Metallfasern für die Flakes und/oder Einzelfasern. Die Auswahl eines geeigneten Materials für die Fasern der Faserstruktur und die Fasern der Fasern enthaltenden Flakes und/oder Einzelfasern ist dabei abhängig von den gewünschten Eigenschaften des Bauteils.

Insbesondere dann, wenn die Fasern enthaltenden Flakes aus Verschnitt gewonnen werden, ist es jedoch bevorzugt, wenn das Fasermaterial für die Faserstruktur und die Fasern enthaltenden Flakes gleich ist.

Aufgrund der Feuchtigkeitsempfindlichkeit der mit Lactam getränkten Faserstruktur ist es bevorzugt, die Faserstruktur zu kaschieren. Hierzu werden üblicherweise Polymerfolien oder Metallfolien eingesetzt.

Um die Faserstruktur zu kaschieren ist es zum Beispiel möglich, die Faserstruktur vor dem Aufbringen der Monomer, gegebenenfalls Aktivator und gegebenenfalls Katalysator enthaltenden Lösung auf eine Folie aufzubringen. Als Folie eignet sich zum Beispiel eine Polyamidfolie. Der Einsatz der Folie hat den weiteren Vorteil, dass hierdurch qualitativ hochwertige Oberflächen hergestellt werden können, die zum Beispiel als sichtbare Oberfläche eingesetzt werden können. Weiterhin ist es auch möglich, wie bereits vorstehend beschrieben, die Folie als Transportband zu nutzen.

Zum Kaschieren wird in einer Ausführungsform vor oder nach dem Durchlaufen des Walzenpaares, bevorzugt vor dem Durchlaufen des Walzenpaares eine Folie, bevorzugt ebenfalls eine Polyamidfolie, auf die Faserstruktur mit der aufgetragenen Lösung aufgebracht. Hierdurch wird ebenfalls eine qualitativ hochwertige Oberfläche erhalten, die als sichtbare Oberfläche genutzt werden kann. Besonders bevorzugt wird die Folie auf die Faserstruktur dann aufgebracht, wenn die Faserstruktur vor dem Aufbringen der Lösung auf eine Folie aufgelegt worden ist. Hierdurch ist sowohl auf der Unterseite als auch auf der Oberseite der getränkten Faserstruktur eine Folie aufgebracht, so dass beide Seiten der Faserstruktur eine hochwertige Oberfläche aufweisen, die als sichtbare Oberfläche genutzt werden kann.

Neben einer Polyamidfolie kann auch jede beliebige andere Polymerfolie oder Metallfolie genutzt werden. Jedoch ist es lediglich bei Verwendung von Polyamidfolien oder Polyesterfolien möglich, die Folie auch bei der Weiterverarbeitung der getränkten Faserstruktur mitzuverarbeiten. Folien aus allen anderen Materialien müssen vor der Weiterverarbeitung entfernt werden.

Zusätzlich oder alternativ zum Aufbringen der Folie ist es möglich, die getränkte Faserstruktur nach dem Abkühlen zu konfektionieren und dann in Folien einzuschweißen. Dies ermöglicht einerseits den Schutz der konfektionierten getränkten Faserstruktur und andererseits kann hierdurch eine weitere Verbesserung der Oberfläche erhalten werden.

Das Kaschieren hat den weiteren Vorteil, dass kein Wasser, das den Katalysator deaktivieren kann, in die getränkte Faserstruktur eindiffundieren kann. Durch das Einschweißen der konfektionierten getränkten Faserstruktur wird dieser Effekt weiter verstärkt. Zudem werden durch das Einschweißen auch die Schmalseiten der getränkten Faserstruktur verschlossen, so dass auch hier kein Wasser eindringen kann. Hierdurch wird die Lagerfähigkeit des Halbzeugs erhöht.

Als Folie, in die die konfektionierte getränkte Faserstruktur eingeschweißt wird, kann jede beliebige Folie, die wasserundurchlässig ist, eingesetzt werden. Bevorzugt werden Polyamidfolien oder Polyesterfolien eingesetzt. Wenn Folien aus einem Material eingesetzt werden, das verschieden ist von Polyamid oder Polyester, ist es - wie bei der zum Kaschieren verwendeten Folie - im Allgemeinen notwendig, die Folie von der getränkten Faserstruktur vor der Weiterverarbeitung zu entfernen. Die Verwendung von Polyamidfolie und gegebenenfalls von Polyesterfolie, die die Weiterverarbeitung mitsamt der Folie erlaubt, ermöglicht eine einfachere Handhabung, die insbesondere im großtechnischen Bereich gewünscht ist.

Die durch das erfindungsgemäße Verfahren hergestellte getränkte Faserstruktur kann dann in einem weiteren Verfahren zu einem fertigen Bauteil weiterverarbeitet werden. Hierzu ist es zum Beispiel möglich, die getränkte Faserstruktur in eine Form einzulegen, in der die getränkte Faserstruktur zum Bauteil umgeformt wird. Geeignete Verfahren zum Umformen sind zum Beispiel Tiefziehverfahren oder Pressverfahren.

Zum Herstellen des Bauteils wird die getränkte Faserstruktur in der Form auf eine Temperatur geheizt, bei der das Monomer, insbesondere das Lactam, zum Polymer, insbesondere zum Polyamid, polymerisiert. Die Temperatur der Form liegt dabei vorzugsweise im Bereich von 100 bis 200 °C, mehr bevorzugt im Bereich von 120 bis 180 °C und insbesondere im Bereich von 140 bis 179 °C. Der in dem Lactam enthaltene Katalysator katalysiert die anionische Polymerisation zum Polyamid und bleibt nach der Polymerisation im hergestellten Polyamid enthalten.

Ein Ausführungsbeispiel der Erfindung ist in der Figur dargestellt und wird in der nachfolgenden Beschreibung näher erläutert.

Die einzige Figur zeigt eine schematische Darstellung des erfindungsgemäßen Verfahrens zur Herstellung einer getränkten Faserstruktur.

Einer Vorrichtung 1 zur Herstellung einer getränkten Faserstruktur wird eine erste Folie 5 zugeführt. Die erste Folie 5 wird in der hier dargestellten Ausführungsform auf ein Transportband 7 aufgelegt. Als Transportband 7 eignet sich jedes beliebige, dem Fachmann bekannte Transportband, mit dem die Folie 5 eben transportiert werden kann. Die Oberfläche des Transportbandes 7 ist dabei so gestaltet, dass die Folie 5 durch die Bewegung des Transportbandes 7 und beim Auflegen auf das Transportband 7 nicht beschädigt wird. Um das Verfahren kontinuierlich betreiben zu können, ist die Folie 5 auf einer Rolle 9 bevorratet, von der diese abgewickelt und der Vorrichtung 1 zugeführt wird.

In der hier dargestellten Ausführungsform werden auf der Folie 5 zwei Lagen Fasern 11 abgelegt. Die Fasern 11 können dabei als Gewebe, Gewirk, Gestrick, Gelege, Vlies oder als parallel ausgerichtete Fasern, Garne, Zwirne oder Seile vorliegen. Wenn parallel ausgerichtete Fasern eingesetzt werden, so ist es bevorzugt, die Fasern der einzelnen Lagen zueinander gedreht, bevorzugt um 90° zueinander gedreht auszurichten. Die Zugabe der Fasern 11 erfolgt ebenfalls kontinuierlich, wobei die Fasern 11 auf einer Rolle 13 bevorratet sind. Die auf der Folie 5 abgelegten Fasern 11 bilden die zu tränkende Faserstruktur 15.

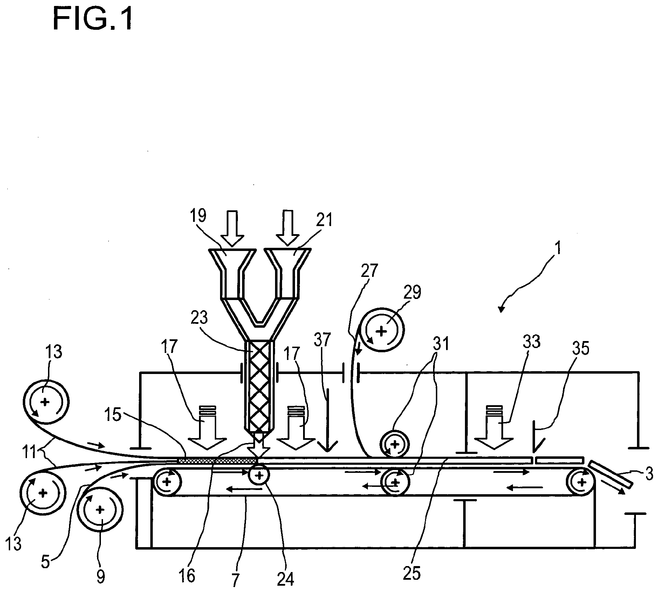

Um eine gleichmäßige Benetzung der Fasern der Faserstruktur 15 mit Lactam zu erhalten, wird die Faserstruktur 15 vorzugsweise erwärmt. Die Wärmezufuhr ist in Figur 1 mit Pfeilen 17 dargestellt. Nach dem Erwärmen wird auf die Faserstruktur 15 geschmolzenes Lactam aufgetragen. Das geschmolzene Lactam enthält vorzugsweise mindestens einen Katalysator, der die anionische Polymerisation zu Polyamid katalysiert sowie gegebenenfalls mindestens einen Aktivator. Zusätzlich können auch noch weitere Additive, mit denen die Eigenschaften eines aus dem Lactam hergestellten Polyamids beeinflusst werden können, enthalten sein. Die Temperatur, auf die die Faserstruktur 15 erwärmt wird, entspricht vorzugsweise der Schmelztemperatur des eingesetzten Lactams. Bevorzugt liegt die Temperatur im Bereich von 70 bis 90°C. Bei der Erwärmung ist darauf zu achten, dass die Temperatur des geschmolzenen Lactams und die Temperatur, auf die die Faserstruktur 15 erwärmt wird, unterhalb der Starttemperatur für die anionische Polymerisation des Lactams gehalten werden. Zum Auftragen des geschmolzenen Lactams kann zum Beispiel eine Düse 16 eingesetzt werden, die das Lactam in Form einer schmalen Linie auf die Faserstruktur 15 aufträgt. Die Düse 16 hat dabei vorzugsweise eine kreisförmige Düsenöffnung mit einem Durchmesser von maximal 2 mm. Die Linie verläuft dabei vorzugsweise parallel zu den seitlichen Rändern der Faserstruktur 15. Bei einer großen Breite der Faserstruktur 15 oder wenn die Menge an Lactam, die durch eine Düse 16 zugeführt wird, nicht groß genug ist, um auf die Faserstruktur 15 soviel Lactam aufzutragen, wie für die Herstellung der getränkten Faserstruktur 3 gewünscht ist, können auch mehrere Düsen 16, die parallel nebeneinander, vorzugsweise mit gleichen Abständen, angeordnet sind, eingesetzt werden.

In der hier dargestellten Ausführungsform wird über einen ersten Zulauf 19 aufgeschmolzenes Lactam mit Aktivator und über einen zweiten Zulauf 21 aufgeschmolzenes Lactam mit Katalysator einer Mischeinheit 23 zugegeben. Die Mischeinheit kann zum Beispiel als Extruder oder auch als statischer Mischer gestaltet sein. In der Mischeinheit wird eine homogene Mischung des Lactams mit Aktivator und Katalysator erzeugt. Das geschmolzene, Aktivator und Katalysator enthaltende Lactam wird durch die Düse 16 auf die textile Struktur 15 aufgetragen.

Neben der vorstehend beschriebenen Düse kann auch jede weitere, dem Fachmann bekannte Vorrichtung zum Tränken der textilen Strukturen 15 eingesetzt werden. So ist es zum Beispiel auch möglich, die textilen Strukturen durch Vorhanggießen oder andere Gießverfahren mit dem geschmolzenen Lactam zu tränken. Alternativ ist es auch möglich, das Lactam auf die textilen Strukturen 15 aufzusprühen. Weiterhin können die textilen Strukturen auch durch ein Bad mit geschmolzenem Lactam geführt werden oder mittels benetzter Walzen getränkt werden. Bevorzugt ist es dabei, die textilen Strukturen durch Aufsprühen zu tränken.

Unterhalb der Düse 16 befindet sich in der hier dargestellten Ausführungsform eine Walze 24, die temperierbar ist. Vorzugsweise lässt sich die Walze 24 auf eine Temperatur im Bereich von -30°C bis 100°C temperieren. Die Temperatur der Walze 24 wird dabei so eingestellt, dass die Viskosität der durch die Düse 16 aufgetragenen Lösung so eingestellt wird, dass sich diese einerseits gleichmäßig in der Faserstruktur 15 verteilen lässt, zum anderen aber auch verhindert wird, dass das Monomer bereits an dieser Stelle zum Polymeren ausreagiert. Zudem darf die Temperatur auch nicht so niedrig gewählt werden, dass die Lösung in der Faserstruktur 15 erstarrt, da hierdurch Lunker und Fehlbildungen in dem aus der getränkten Faserstruktur herzustellenden Bauteil entstehen können.

Nach dem Tränken wird auf die getränkte Faserstruktur 25 in der hier dargestellten Ausführungsform eine zweite Folie 27 aufgebracht. Die zweite Folie 27 wird dabei vorzugsweise ebenso wie die erste Folie 5 von einer Rolle 29, auf der sie bevorratet ist, abgerollt.

In einem nächsten Schritt wird die getränkte Faserstruktur 25 durch ein Walzenpaar 31 geführt, in dem Druck auf die getränkte Faserstruktur 25 ausgeübt wird. Der Abstand der Walzen des Walzenpaares 31 beträgt dabei vorzugsweise das 1 bis 1,5 fache der Dicke der ungetränkten Faserstruktur 15 plus der Dicke des Transportbandes 7 und der Folie 5.

In einer hier nicht dargestellten Ausführungsform wird nach dem Tränken auf der Oberseite und/oder der Unterseite der getränkten textilen Struktur mindestens eine weitere Faserlage aufgebracht. Die zusätzlich aufgebrachten Fasern sind dabei vorzugsweise von der gleichen Art wie die Fasern 11, die die textile Struktur 15 bilden. Alternativ ist es jedoch auch möglich, dass die Fasern, die die Faserstruktur 15 bilden, zum Beispiel einzelne Lagen parallel ausgerichteter Fasern, Garne, Zwirne oder Seile sind, oder dass ein Vlies die Faserstruktur 15 bildet und die zusätzlichen Lagen Gewebe, Gewirke oder Gestricke sind.

Durch das Pressen der getränkten Faserstruktur 25 wird Lactam auch in die zusätzlich aufgebrachten Faserlagen gepresst, wodurch die zusätzlich aufgebrachten Faserlagen ebenfalls mit Lactam getränkt werden.

Nach dem Pressen wird die getränkte Faserstruktur 25 abgekühlt. Dies ist mit einem Pfeil 33 dargestellt. Durch das Abkühlen erstarrt das Lactam und es entsteht eine Faserstruktur, die festes Lactam enthält. Diese kann dann mit einem Schneidwerkzeug 35, beispielsweise einem Messer, einer Stanze oder einer Säge, zu einem faserverstärkten, flachen Halbzeug 3 konfektioniert werden.

Erfindungsgemäß werden auf die getränkte Faserstruktur vor dem Durchführen durch das Walzenpaar 31 an der mit einem Pfeil 37 gekennzeichneten Stelle Fasern enthaltende Flakes, zum Beispiel zerkleinerter, Fasern enthaltender Verschnitt, und/oder Einzelfasern aufgebracht. Die Fasern enthaltenden Flakes und/oder Einzelfasern können dabei gleichmäßig verteilt aufgebracht werden oder nur an Positionen, an denen eine zusätzliche Verstärkung gewünscht ist. Das Aufbringen der Fasern enthaltenden Flakes und/oder Einzelfasern erfolgt dabei vorzugsweise durch Aufstreuen.

### Beispiele

### Vergleichsbeispiel

Über den ersten Zulauf 19 werden unter Stickstoffatmosphäre bei 90°C geschmolzene Caprolactam-Pillen und ein Katalysator zugegeben. Über den zweiten Zulauf 21 werden bei einer Temperatur von 90°C aufgeschmolzene Caprolactam-Pillen und ein Initiator zugegeben.

Die Initiator enthaltende Schmelze und die Katalysator enthaltende Schmelze werden im Verhältnis 50:50 eingesetzt. Hierzu werden die Schmelzen in der Mischeinheit 23 intensiv vermischt und in einem niedrigviskosen Zustand auf die vorgewärmte und getrocknete Faserstruktur 15 aufgetragen.

Als Faserstruktur wird ein Köper-Gewebe 2/2 der Firma OCV mit einer Masse von 600 g/m² eingesetzt. Das Gewebe wird von mehreren Spulen zugeführt und in der Vorheizeinheit 17 bei einer Temperatur von 100°C vorgewärmt und getrocknet. Die Faserstruktur wird hinter der Vorheizeinheit 17 über eine Walze 24 geführt, die unterhalb der Düse 16 positioniert ist, durch die das geschmolzene Caprolactam mit Initiator und Katalysator zugegeben wird. Der Auftrag erfolgt dabei punktuell. Die Walze 24 hat Raumtemperatur, die zugeführte Mischung aus Caprolactam, Initiator und Katalysator hat eine Temperatur von 90°C und die Temperatur unmittelbar hinter dem Auftrag der Mischung aus Caprolactam, Initiator und Katalysator auf die Faserstruktur 15 liegt bei 90°C. Die Temperatur vor dem Walzenpaar 31 beträgt 80°C.

Im Walzenpaar 31 wird die mit dem Caprolactam, Initiator und Katalysator getränkte Faserstruktur kalandriert, wobei durch den Abstand der Walzen des Walzenpaares 31 die Dicke und damit auch die Qualität der Imprägnierung einstellbar sind. Die Temperatur der getränkten Faserstruktur muss beim Kalandrieren noch so hoch sein, dass das Lactam flüssig ist. Unmittelbar hinter dem Walzenpaar 31 wird die getränkte Faserstruktur gekühlt, so dass das Lactam erstarrt. Die Temperatur hinter der Kühlung 33 liegt bei 50°C.

Die gesamte Imprägnierung wird unter trockener Luft durchgeführt, um die Qualität des hergestellten Prepregs sicherzustellen.

Das hergestellte Halbzeug weist eine exakte Querschnittsform auf und enthält 40 bis 50 Vol.-% Fasern und 50 bis 60 Vol.-% aktiviertes aber noch unreagiertes Caprolactam. Der Polymeranteil liegt unter 2 %.

Nach der Abkühlung wird das so hergestellte Halbzeug konfektioniert. Um die gewünschte Bauteildicke zu erhalten, werden 3 Lagen des Prepregs gestapelt. Die drei Lagen werden in die gewünschte Bauteilform gestanzt und in ein Werkzeug eingelegt. Im Werkzeug wird das Bauteil bei 150°C in 3 Minuten konsolidiert. Beim Konsolidieren reagiert das Monomer zum Polymer.

### Beispiel 1

Es wird, wie im Vergleichsbeispiel beschrieben, ein Halbzeug hergestellt. Im Unterschied zum Vergleichsbeispiel wird der bei der Konfektionierung anfallende Verschnitt unter trockener Atmosphäre gehackt und an der Zugabestelle 37 kontinuierlich auf der Oberfläche der getränkten Faserstruktur verteilt. Die Anteile an Fasern und Caprolactam entsprechen denen im Vergleichsbeispiel.

Aus den so hergestellten Prepregs werden wie auch im Vergleichsbeispiel in einem Werkzeug bei 150°C in 3 Minuten Fertigteile hergestellt. Der Anteil an Verschnitt und an Fasern wird so gewählt, dass das so hergestellte Fertigteil 50 Vol.-% Fasern enthält, wobei 90% der Fasern als Endlosfasern vorliegen und 5% als Kurzfasern und/oder Langfasern.

### Beispiel 2

Beispiel 1 wird wiederholt, mit dem Unterschied, dass zusätzlich zum Verschnitt, der bei der Konfektionierung anfällt und nur nichtpolymerisiertes Monomer enthält, auch der bei der Fertigteilherstellung anfallende Verschnitt eingesetzt wird. Der Verschnitt wird unter trockener Atmosphäre gehackt und an der Zugabestelle 37 kontinuierlich auf der Oberfläche des Prepregs verteilt. Der Anteil an Caprolactam und Fasern entspricht dem im Vergleichsbeispiel.

Aus den Prepregs wird in einem Werkzeug bei 150°C in 3 Minuten ein Fertigteil hergestellt. Das Werkzeug enthält zusätzlich eine Verrippungskavität. In der Verrippungskavität sammelt sich der aufgebrachte Verschnitt, so dass das so hergestellte Bauteil 50 Vol.-% Gewebe in der Basis und 25 Vol.-% Kurzfasern und/oder Langfasern in der Verrippung enthält.

### Beispiel 3

Beispiel 2 wird wiederholt, mit dem Unterschied, dass der Verschnitt nicht gleichmäßig verteilt auf der Oberfläche der getränkten Faserstruktur verteilt wird. Der Verschnitt wird zusammen mit Monomer, Aktivator und Katalysator einem Spritzgussaggregat zugeführt, mit dem bei der Herstellung des Fertigteils aus dem Prepreg in die Verrippungskavitäten des Werkzeugs der geschmolzene Verschnitt eingespritzt wird. Das Werkzeug hat auch hier eine Temperatur von 150°C. Das für die Verrippung aufgespritzte Material enthält einen größeren Anteil an Polymer, der Anteil an Fasern im aufgespritzten Material beträgt 20 bis 40 Gew.-%.

Nach drei Minuten wird das Bauteil aus dem Werkzeug entnommen. Das Bauteil hat eine Basis mit einem Faseranteil von 50 Vol.-% und eine Verrippung, die 25 Vol.-% Fasern enthält.

### Beispiel 4

Beispiel 2 wird wiederholt, der Verschnitt wird jedoch nicht kontinuierlich an der Zugabestelle zugegeben sondern erst kurz vor der Konsolidierung nicht kontinuierlich und nicht gleichmäßig verteilt.

Aus den so herstellten Prepregs wird in einem Werkzeug bei 150°C in 3 Minuten ein Fertigteil hergestellt. In der Verrippungskavität des Werkzeugs sammelt sich der nicht gleichmäßig aufgebrachte Verschnitt, so dass das hergestellte Bauteil 50 Vol.-% Gewebe in der Basis und 25 Vol.-% Kurzfasern und/oder Langfasern in der Verrippung enthält.

### Beispiel 5

Im Unterschied zu den vorherigen Beispielen wird das Halbzeug erst nach dem auspolymerisieren konfektioniert. Hierdurch entsteht nur bereits auspolymerisierter Verschnitt. Dieser wird geschreddert und einem Spritzgussaggregat zugeführt, in dem das konfektionierte und auspolymerisierte Halbzeug überspritzt wird, um eine Verrippung zu produzieren.

In allen Beispielen wurde nur der Verschnitt aus den hergestellten Prepregs oder Fertigteilen der entsprechenden Beispiele oder des Vergleichsbeispiels eingesetzt, so dass das Monomer und das Polymer des Verschnitts dem des Prepregs beziehungsweise dem des Fertigteils entsprechen.

### Bezugszeichenliste

- 1: Vorrichtung zur Herstellung faserverstärkter, flacher Halbzeuge
- 3: faserverstärktes, flaches Halbzeug
- 5: Polyamidfolie
- 7: Transportband
- 9: Rolle mit Polyamidfolie
- 11: Faser
- 13: Rolle mit Faservorrat
- 15: Faserstruktur
- 16: Düse
- 17: Wärmezufuhr
- 19: erster Zulauf
- 21: zweiter Zulauf
- 23: Mischeinheit
- 24: Walze
- 25: getränkte Faserstruktur
- 27: zweite Polyamidfolie
- 29: Rolle mit zweiter Polyamidfolie
- 31: Walzenpaar
- 33: Abkühlung
- 35: Schneidwerkzeug
- 37: Zugabe des zerkleinerten Verschnitts

## Patentansprüche

1. Verfahren zur Herstellung faserverstärkter Halbzeuge, wobei Fasern (11) mit Monomer getränkt werden und nach dem Tränken Fasern enthaltende Flakes und/oder Einzelfasern zugegeben werden, **dadurch gekennzeichnet, dass** folgende Schritte durchgeführt werden:
(a) Zuführen einer Faserstruktur (15) auf ein Transportband (7),
(b) Tränken der Faserstruktur (15) mit einer Monomer, gegebenenfalls Aktivator und gegebenenfalls Katalysator enthaltenden Lösung,
(c) Verteilen der Fasern enthaltenden Flakes (37) und/oder der Einzelfasern auf der getränkten Faserstruktur,
(d) Durchführen der Faserstruktur (15) mit der Lösung durch mindestens ein Walzenpaar (31), in dem Druck auf die Faserstruktur (15) ausgeübt wird,
(e) Abkühlen der getränkten Faserstruktur (25), so dass das Monomer erstarrt.

2. Verfahren gemäß Anspruch 1, **dadurch gekennzeichnet, dass** zerkleinerter, Fasern enthaltender Verschnitt (37) als Fasern enthaltende Flakes eingesetzt wird.

3. Verfahren gemäß Anspruch 1 oder 2, **dadurch gekennzeichnet, dass** die Fasern enthaltenden Flakes auspolymerisiertes und/oder nicht auspolymerisiertes, erstarrtes Monomer enthalten.

4. Verfahren gemäß einem der Ansprüche 1 bis 3, **dadurch gekennzeichnet, dass** die Fasern enthaltenden Flakes durch Hacken, Mahlen oder Schreddern hergestellt werden.

5. Verfahren gemäß einem der Ansprüche 1 bis 4, **dadurch gekennzeichnet, dass** die Fasern enthaltenden Flakes so weit zerkleinert sind, dass die in den Flakes enthaltenen Fasern eine Länge im Bereich von 10 µm bis 10 cm aufweisen.

6. Verfahren gemäß einem der Ansprüche 1 bis 5, **dadurch gekennzeichnet, dass** der Anteil an Fasern enthaltenden Flakes und/oder Einzelfasern bezogen auf die Masse der abgekühlten getränkten Faserstruktur im Bereich von 2 bis 60 Gew.-% liegt.

7. Verfahren gemäß einem der Ansprüche 1 bis 6, **dadurch gekennzeichnet, dass** das Monomer der getränkten Faserstruktur (25) noch flüssig ist, wenn die Fasern enthaltenden Flakes und/oder Einzelfasern darauf verteilt werden.

8. Verfahren gemäß einem der Ansprüche 1 bis 7, **dadurch gekennzeichnet, dass** die getränkte Faserstruktur (25) eine Temperatur von mehr als 70°C aufweist, wenn die Fasern enthaltenden Flakes und/oder Einzelfasern darauf verteilt werden.

9. Verfahren gemäß einem der Ansprüche 1 bis 8, **dadurch gekennzeichnet, dass** die Fasern enthaltenden Flakes an Positionen auf die getränkte Faserstruktur (25) aufgebracht werden, an denen eine zusätzliche Verstärkung notwendig ist oder dass die Fasern enthaltenden Flakes und/oder Einzelfasern gleichmäßig auf der getränkten Faserstruktur (25) aufgebracht werden.

10. Verfahren gemäß einem der Ansprüche 1 bis 9, **dadurch gekennzeichnet, dass** die getränkte Faserstruktur (25) mit den darauf verteilten Fasern enthaltenden Flakes und/oder Einzelfasern in einem Pressverfahren hergestellt wird.

11. Verfahren gemäß einem der Ansprüche 1 bis 10, **dadurch gekennzeichnet, dass** zur Ausbildung von Funktionselementen eine Mischung aus Monomer, Fasern und Fasern enthaltender Flakes auf die Faserstruktur oder das Bauteil aufgespritzt wird.

12. Verfahren gemäß einem der Ansprüche 1 bis 11, **dadurch gekennzeichnet, dass** das Monomer ausgewählt ist aus der Gruppe der Lactame, vorzugsweise Caprolactam, Piperidon, Pyrrolydon, Lauryllactam oder deren Mischungen, gegebenenfalls gemischt mit bis zu 50 Vol.-% Monomeren aus der Gruppe der Lactone, vorzugsweise Caprolacton.

13. Verfahren gemäß einem der Ansprüche 1 bis 12, **dadurch gekennzeichnet, dass** die Faserstruktur (15) ein Gewebe, Gelege, Vlies, Gestrick, Gewirk oder Geflecht ist oder aus Rovings aufgebaut ist.

14. Verfahren gemäß einem der Ansprüche 1 bis 13, **dadurch gekennzeichnet, dass** die Fasern ausgewählt sind aus Glasfasern, Kohlenstofffasern, Aramidfasern, Stahlfasern, Kaliumtitanatfasern, Basaltfasern, Keramikfasern oder Mischungen daraus.

15. Verfahren gemäß einem der Ansprüche 1 bis 14, **dadurch gekennzeichnet, dass** für die Faserstruktur (15) und die Fasern der Fasern enthaltenden Flakes und/oder die Einzelfasern Fasern aus dem gleichen Material oder aus unterschiedlichen Materialien eingesetzt werden.

## Claims

1. Method for the production of fiber-reinforced semi-finished products, wherein the fibers (11) are impregnated with monomer and fiber-containing flakes and/or individual fibers are added after impregnation, **characterized in that** the following steps are performed:
(a) Feeding a fiber structure (15) onto a conveyor belt (7),
(b) Impregnating the fiber structure (15) using a solution containing monomer, optionally an activator and optionally a catalyst,
(c) Distributing the fiber-containing flakes (37) and/or the individual fibers over the impregnated fiber structure,
(d) Passing the fiber structure (15) with the solution through at least one pair of rollers (3), in which pressure is applied to the fiber structure (15),
(e) Cooling the impregnated fiber structure (25) so that the monomer solidifies.

2. Method according to Claim 1, **characterized in that** cutting scrap (37) containing fibers is used as fiber-containing flakes.

3. Method according to Claim 1 or 2, **characterized in that** the fiber-containing flakes contain fully polymerized and/or non-fully polymerized solidified monomer.

4. Method according to any one of Claims 1 to 3, **characterized in that** the fiber-containing flakes are produced by chopping, milling, or shredding.

5. Method according to any one of Claims 1 to 4, **characterized in that** the fiber-containing flakes are cut sufficiently small that the fibers contained in the flakes have a length in a range from 10 µm to 10 cm.

6. Method according to any one of Claims 1 to 5, **characterized in that** the proportion of fiber-containing flakes and/or individual fibers falls within the range of 2 to 60 % by weight relative to the mass of the cooled impregnated fiber structure.

7. Method according to any one of Claims 1 to 6, **characterized in that** the monomer of the impregnated fiber structure (25) is still liquid when the fiber-containing flakes and/or individual fibers are distributed over it.

8. Method according to any one of Claims 1 to 7, **characterized in that** the impregnated fiber structure (25) has a temperature of more than 70°C when the fiber-containing flakes and/or individual fibers are distributed over it.

9. Method according to any one of Claims 1 to 8, **characterized in that** the fiber-containing flakes are deposited on the impregnated fiber structure (25) at positions at which additional reinforcement is necessary or **in that** the fiber-containing flakes and/or individual fibers are deposited evenly over the impregnated fiber structure (25).

10. Method according to any one of Claims 1 to 9, **characterized in that** the impregnated fiber structure (25) with the fiber-containing flakes and/or individual fibers distributed over it is produced in a pressing process.

11. Method according to any one of Claims 1 to 10, **characterized in that** a mixture of monomer, fibers, and fiber-containing flakes is sprayed onto the fiber structure or the component in order to form functional elements.

12. Method according to any one of Claims 1 to 11, **characterized in that** the monomer is selected from the group of lactams, preferably caprolactam, piperidone, pyrrolydone, lauryl lactam or mixtures thereof, optionally mixed with up to 50% by volume of monomers from the group of lactones, preferably caprolactone.

13. Method according to any one of Claims 1 to 12, **characterized in that** the fiber structure (15) is a woven fabric, non-crimp fabric, non-woven fabric, knotted fabric, knitted fabric or meshwork or is composed of rovings.

14. Method according to any one of Claims 1 to 13, **characterized in that** the fibers are selected from glass fibers, carbon fibers, aramid fibers, steel fibers, potassium titanate fibers, basalt fibers, ceramic fibers or mixtures thereof.

15. Method according to any one of Claims 1 to 14, **characterized in that** fibers made of the same material or of different materials are used for the fiber structure (15) and the fibers of the fiber-containing flakes and/or the individual fibers.

## Revendications

1. Procédé pour la fabrication de semi-produits renforcés par des fibres, les fibres (11) étant imprégnées de monomère et des paillettes contenant des fibres et/ou des fibres individuelles étant ajoutées après l'imprégnation, **caractérisé en ce que** les étapes suivantes sont exécutées :
(a) alimentation d'une structure fibreuse (15) sur une bande transporteuse (7),
(b) imprégnation de la structure fibreuse (15) par une solution contenant un monomère, le cas échéant un activateur et, le cas échéant, un catalyseur,
(c) répartition des paillettes contenant des fibres (37) et/ou des fibres individuelles sur la structure fibreuse imprégnée,
(d) passage de la structure fibreuse (15) présentant la solution à travers au moins une paire de rouleaux (3), dans laquelle une pression est exercée sur la structure fibreuse (15),
(e) refroidissement de la structure fibreuse imprégnée (25), de sorte que le monomère se solidifie.

2. Procédé selon la revendication 1, **caractérisé en ce que** des chutes (37) désintégrées, contenant des fibres, sont utilisées comme paillettes contenant des fibres.

3. Procédé selon la revendication 1 ou 2, **caractérisé en ce que** les paillettes contenant des fibres contiennent du monomère solidifié complètement polymérisé et/ou non complètement polymérisé.

4. Procédé selon l'une quelconque des revendications 1 à 3, **caractérisé en ce que** les paillettes contenant des fibres sont produites par hachage, broyage ou déchiquetage.

5. Procédé selon l'une quelconque des revendications 1 à 4, **caractérisé en ce que** les paillettes contenant des fibres sont désintégrées jusqu'au point où les fibres contenues dans les paillettes présentent une longueur dans la plage de 10 µm à 10 cm.

6. Procédé selon l'une quelconque des revendications 1 à 5, **caractérisé en ce que** la proportion de paillettes contenant des fibres et/ou de fibres individuelles par rapport à la masse de la structure fibreuse imprégnée refroidie est située dans la plage de 2 à 60 % en poids.

7. Procédé selon l'une quelconque des revendications 1 à 6, **caractérisé en ce que** le monomère de la structure fibreuse imprégnée (25) est encore liquide lorsque les paillettes contenant des fibres et/ou les fibres individuelles sont distribuées sur celle-ci.

8. Procédé selon l'une quelconque des revendications 1 à 7, **caractérisé en ce que** la structure fibreuse imprégnée (25) présente une température supérieure à 70 °C lorsque les paillettes contenant des fibres et/ou les fibres individuelles sont distribuées sur celle-ci.

9. Procédé selon l'une quelconque des revendications 1 à 8, **caractérisé en ce que** les paillettes contenant des fibres sont appliquées sur la structure fibreuse imprégnée (25) en dans positions dans lesquelles un renforcement supplémentaire est nécessaire ou **en ce que** les paillettes contenant des fibres et/ou les fibres individuelles sont appliquées de manière uniforme sur la structure fibreuse imprégnée (25).

10. Procédé selon l'une quelconque des revendications 1 à 9, **caractérisé en ce que** la structure fibreuse imprégnée (25) sur laquelle les paillettes contenant des fibres et/ou les fibres individuelles ont été distribuées est fabriquée dans un procédé de pressage.

11. Procédé selon l'une quelconque des revendications 1 à 10, **caractérisé en ce que**, pour la formation d'éléments fonctionnels, un mélange de monomère, de fibres et de paillettes contenant des fibres est pulvérisé sur la structure fibreuse ou sur le composant.

12. Procédé selon l'une quelconque des revendications 1 à 11, **caractérisé en ce que** le monomère est choisi dans le groupe des lactames, de préférence le caprolactame, la pipéridone, la pyrrolidone, le lauryllactame ou les mélanges de ceux-ci, le cas échéant mélangé avec jusqu'à 50 % en volume de monomères choisis dans le groupe des lactones, de préférence la caprolactone.

13. Procédé selon l'une quelconque des revendications 1 à 12, **caractérisé en ce que** la structure fibreuse (15) est un tissu, une nappe, un non-tissé, un tricot, un tissu à mailles ou une tresse ou est constituée de stratifils.

14. Procédé selon l'une quelconque des revendications 1 à 13, **caractérisé en ce que** les fibres sont choisies parmi les fibres de verre, les fibres de carbone, les fibres d'aramide, les fibres d'acier, les fibres de titanate de potassium, les fibres de basalte, les fibres de céramique ou les mélanges de celles-ci.

15. Procédé selon l'une quelconque des revendications 1 à 14, **caractérisé en ce que** des fibres d'un même matériau ou de matériaux différents sont utilisées pour la structure fibreuse (15) et pour les fibres des paillettes contenant des fibres et/ou pour les fibres individuelles.
